(19) Europäisches Patentamt
European Patent Office
Office européen des brevets

(11) **EP 3 824 257 B1**

(12) **EUROPÄISCHE PATENTSCHRIFT**

(45) Veröffentlichungstag und Bekanntmachung des Hinweises auf die Patenterteilung:
**12.04.2023 Patentblatt 2023/15**

(21) Anmeldenummer: **19730348.0**

(22) Anmeldetag: **13.06.2019**

(51) Internationale Patentklassifikation (IPC):
*H01Q 1/22* (2006.01)    *H01Q 13/24* (2006.01)
*H01Q 19/08* (2006.01)    *G01F 23/284* (2006.01)

(52) Gemeinsame Patentklassifikation (CPC):
**G01F 23/284; H01Q 1/225; H01Q 13/24; H01Q 19/08**

(86) Internationale Anmeldenummer:
**PCT/EP2019/065452**

(87) Internationale Veröffentlichungsnummer:
**WO 2020/015934 (23.01.2020 Gazette 2020/04)**

(54) **FÜLLSTANDSMESSGERÄT**

FILL LEVEL MEASUREMENT DEVICE

DISPOSITIF DE MESURE DE NIVEAU DE REMPLISSAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.07.2018 DE 102018117164**

(43) Veröffentlichungstag der Anmeldung:
**26.05.2021 Patentblatt 2021/21**

(73) Patentinhaber: **Endress+Hauser SE+Co. KG**
**79689 Maulburg (DE)**

(72) Erfinder:
• **PANKRATZ, Klaus**
**79400 Kandern (DE)**
• **SCHWALD, Rolf**
**79650 Schopfheim (DE)**
• **FEISST, Klaus**
**79252 Stegen (DE)**

(74) Vertreter: **Koslowski, Christine Adelheid**
**Endress+Hauser Group Services**
**(Deutschland) AG+Co. KG**
**Colmarer Straße 6**
**79576 Weil am Rhein (DE)**

(56) Entgegenhaltungen:
WO-A1-2018/114186    DE-A1-102012 103 493
US-A- 3 828 284    US-A- 5 703 289

## Beschreibung

Die Erfindung betrifft ein Radar-basiertes Füllstandsmessgerät zur Messung eines Füllstandes eines in einem Behälter befindlichen Füllgutes.

In der Automatisierungstechnik, insbesondere in der Prozessautomatisierungstechnik, werden vielfach Feldgeräte eingesetzt, die zur Erfassung und/oder zur Beeinflussung von Prozessvariablen dienen. Zur Erfassung von Prozessvariablen werden Sensoren eingesetzt, die beispielsweise in Füllstandsmessgeräten, Durchflussmessgeräten, Druck- und Temperaturmessgeräten, pH-Redoxpotential-Messgeräten, Leitfähigkeitsmessgeräten, usw. zum Einsatz kommen. Sie erfassen die entsprechenden Prozessvariablen, wie Füllstand, Durchfluss, Druck, Temperatur, pH-Wert, Redoxpotential oder Leitfähigkeit. Eine Vielzahl dieser Feldgeräte wird von der Firma Endress + Hauser hergestellt und vertrieben.

Zur Füllstandsmessung bei Füllgütern in Behältern haben sich berührungslose Messverfahren etabliert, da sie robust und wartungsarm sind. Ein weiterer Vorteil berührungsloser Messverfahren besteht in ihrer Fähigkeit, den Füllstand quasi kontinuierlich, also mit einer hohen Auflösung messen zu können. Aus diesem Grund werden hierzu vorwiegend Radar-basierte Messverfahren eingesetzt. Etablierte Messprinzipien bilden hierbei das FMCW-Messprinzip ("*Frequency Modulated Continuos Wave*") oder auch das so genannte Puls-Laufzeit-Verfahren. In beiden Fällen wird das Radar-Signal über eine Antenne, die am Behälter befestigt ist und in das Innere des Behälters gerichtet ist, in Richtung des Füllgutes gesendet und nach Reflektion wieder empfangen. Dabei liegen die Frequenzen der ausgesendeten elektromagnetischen Wellen im Bereich einer standardisierten Mittenfrequenz (im Zusammenhang mit den Begriffen "*Radar*" bzw. "*Hochfrequenz-Signal*" sind im Rahmen der Erfindung Frequenzen zwischen 0.3 GHz und 300 GHz gemeint). Bedingt durch behördliche Zulassungsvorschriften werden in der Regel Frequenzen bei 6 GHz, 26 GHz, oder 79 GHz verwendet. Das Funktionsprinzip des Puls-Laufzeit-Verfahrens wird beispielsweise in der Veröffentlichungsschrift DE 10 2010 063 430 A1 genannt. Zum Funktionsprinzip des FMCW-Messprinzips sei exemplarisch auf die Veröffentlichungsschrift WO 2012/139852 A1 hingewiesen. Unabhängig vom Messprinzip sind höhere Frequenzen vorteilhaft, da mit steigender Frequenz potentiell auch die Auflösung der Füllstandsmessung steigt. Das Dokument US 5 703 289 A offenbart auch ein Radarfüllstandmessgerät.

Je nach Einsatz-Zweck des Behälters können im Behälter-Inneren Temperaturen von bis zu 200 °C und Überdrücke von mehreren Bar vorherrschen. In diesem Fall besteht eine besondere Herausforderung darin, das Füllstandsmessgerät fluidisch vom Behälter-Inneren zu isolieren, da je nach Füllgut gegebenenfalls Kondensat über die Antenne bzw. den anschließenden Hohlleiter in das Füllstandsmessgerät eindringen kann. Dadurch kann wiederum die Funktionsfähigkeit des Füllstandsmessgerätes beeinträchtigt werden.

Um dies zu vermeiden, wird der Hohlleiter in zwei Teilbereiche untergliedert, wobei der zweite Teilbereich der Antenne und somit dem Füllgut zugewandt ist. Dabei trennt eine Temperatur- und Druckbeständige Isolation, die für die Hochfrequenz-Signale transparent ist, den ersten Teilbereich fluidisch vom zweiten Teilbereich ab. Hierdurch wird ein Eindringen von gasförmigem Füllgut in das Füllstandsmessgerät vermieden. Allerdings ist es bei diesem Aufbau nicht ausgeschlossen, dass sich Kondensat an der Isolation absetzt und dadurch den Hohlleiter für die Hochfrequenz-Signale blockiert.

Der Erfindung liegt daher die Aufgabe zugrunde, ein Füllstandsmessgerät bereitzustellen, welches bei hohen Temperaturen und Drücken im Behälter eingesetzt werden kann.

Die Erfindung löst diese Aufgabe durch ein Füllstandsmessgerät zur Bestimmung eines Füllstandes eines in einem Behälter befindlichen Füllgutes. Es umfasst:

- Eine Hochfrequenz-Einheit, die ausgelegt ist, Hochfrequenz-Signale derart zu erzeugen und/oder verarbeiten, um den Füllstand zu bestimmen,
- einen Hohlleiter, der so an die Hochfrequenz-Einheit gekoppelt ist, um die Hochfrequenz-Signale gen Füllgut zu senden und/oder um am Füllgut reflektierte Hochfrequenz-Signale zu empfangen, wobei sich der Hohlleiter in

  ○ einen ersten, der Hochfrequenz-Einheit zugewandten Teilbereich, und
  ○ einen zweiten, dem Füllgut zuwendbaren Teilbereich, dessen Öffnung gen Behälter hin konisch aufweitend ausgelegt werden kann und somit eine Antenne ausbildet,

  untergliedert, und
- eine für die Hochfrequenz-Signale transparente Isolation, die den ersten Teilbereich fluidisch vom zweiten Teilbereich abtrennt, wobei ein Gewinde den ersten Hohlraum fluidisch mit dem zweiten Teilbereich verbindet.

Erfindungsgemäß zeichnet sich das Füllstandsmessgerät durch einen ersten Hohlraum aus, der fluidisch mit dem zweiten Teilbereich verbunden ist. Dabei ist der erste Hohlraum in Bezug zum zweiten Teilbereich hinter der Isolation angeordnet. In diesem Zusammenhang definiert sich eine fluidische Verbindung als stoffdurchlässige Verbindung, durch die ein Druckausgleich zwischen den verbundenen Kammern hergestellt wird. Durch den fluidisch verbundenen Hohlraum lagert sich etwaiges Kondensat aus dem Inneren des Behälters vorzugsweise dort an, da sich der erste Hohlraum in Bezug zum potentiell heißen Behälter-Inneren in einem prinzipiell kälteren Bereich hinter der Isolation befindet. Hierdurch bleibt die Isolation frei von Kondensat. Aufgrund der bei hohen Frequenzen prinzipiell geringeren Abmessungen des Hohlleiters wirkt sich die Erfindung besonders vorteilhaft auf das Füllstandsmessgerät aus, sofern die Hochfrequenz-Einheit ausgelegt ist, die Hochfrequenz-Signale mit Frequenzen von mehr als 75 GHz, insbesondere mehr als 100 GHz, zu erzeugen.

Vorzugsweise ist der thermische Widerstand des Hohlleiters zwischen der Isolation und dem ersten Hohlraum so bemessen, dass bei einer Temperatur im Behälter von mindestens 180° C die Temperaturdifferenz zu der Temperatur im ersten Hohlraum mindestens 30° C beträgt. Dies erhöht die Kondensationsrate im ersten Hohlraum, bzw. verringert das Risiko der Kondensatbildung an der Isolation. In diesem Zusammenhang kann der thermische Widerstand des Hohlleiters zwischen der Isolation und dem ersten Hohlraum einerseits durch entsprechende Bemaßung des Abstandes zwischen der Isolation und dem ersten Hohlraum, oder der Querschnittsfläche des Hohlleiters in diesem Bereich eingestellt werden. Andererseits kann der thermische Widerstand durch das Material des Hohlleiters, bspw. Edelstahl mit einem Wärmeleitkoeffizienten $\lambda_H$ von 15 W/(m*K), entsprechend beeinflusst werden.

Neben der Einstellung des thermischen Widerstandes kann das Risiko der Kondensatbildung an der Isolation durch einen zweiten Hohlraum, der fluidisch mit dem zweiten Teilbereich verbunden ist, zusätzlich vermindert werden. Dabei ist der zweite Hohlraum in Bezug zum zweiten Teilbereich vor der Isolation angeordnet. Durch den zusätzlichen, zweiten Hohlraum wird der Druckanstieg im gesamten Hohlraum verlangsamt und der für eine Kondensatbildung notwendige Druck, also der Partialdampfdruck des Gases bei Hohlraumtemperatur, wird deutlich später erreicht.

Die fluidische Verbindung wird auf einfache Weise hergestellt, indem der erste Hohlraum durch ein Gewinde fluidisch mit dem zweiten Teilbereich verbunden ist. Realisierbar ist dies beispielsweise, indem der Hohlleiter so ausgelegt wird, dass der zweite Teilbereich eine Einfassung für den ersten Teilbereich bildet. Als nicht erfindungsgemäße Alternative ist es natürlich ebenso denkbar, die fluidische Verbindung konstruktiv völlig losgelöst von der mechanischen Fixierung der zwei Teilbereiche zu realisieren.

Die Erfindung schließt nicht aus, dass das erfindungsgemäße Füllstandsmessgerät, wie es nach dem Stand der Technik bekannt ist, zusätzlich zur Isolation im Hohlleiter eine Prozesstrennung umfasst. Dabei schließt die Prozesstrennung den zweiten Teilbereich des Hohlleiters gen Füllgut ab. Da solche Prozesstrennungen in der Regel aus einem die für Hochfrequenz-Signale transparenten Kunststoff-Material wie PMMA, PTFE oder PS gefertigt sind, kann es vorkommen, dass die Prozesstrennung zum Hohlleiter hin nicht ausreichend formschlüssig ist. Daher kann es in diesen Fällen vorteilhaft sein, wenn zwischen der Prozesstrennung und dem Endbereich des zweiten Teilbereichs eine fluidische Dichtung, insbesondere aus zumindest zwei Dichtringen bestehend, angeordnet ist. Sofern das erfindungsgemäße Füllstandsmessgerät eine zusätzliche Prozesstrennung umfasst, kann der erste Hohlraum derart in Abhängigkeit des Permeationskoeffizienten der fluidischen Dichtung ausgelegt werden, so dass das Volumen des Hohlraums mit zumindest 1,2 cm³ pro einem Permeationskoeffizient der Dichtung von 10⁻¹² kg/(s*bar) bemessen ist. Diese Bemaßung stellt sicher, dass sich der erste Hohlraum in einem ausreichenden Zeitraum der Geräte-Nutzung nicht vollständig mit Kondensat füllt. Somit wird eine hinreichende Lebensdauer des Füllstandsmessgerätes gewährleistet.

Anhand der nachfolgenden Figuren wird die Erfindung näher erläutert. Es zeigt:

Fig. 1: Eine prinzipielle Anordnung eines erfindungsgemäßen Füllstandsmessgerätes an einem Behälter,

Fig. 2: eine schematische Darstellung der Komponenten des erfindungsgemäßen Füllstandsmessgerätes, und

Fig. 3: eine Detailansicht der wesentlichen Komponenten des Füllstandsmessgerätes.

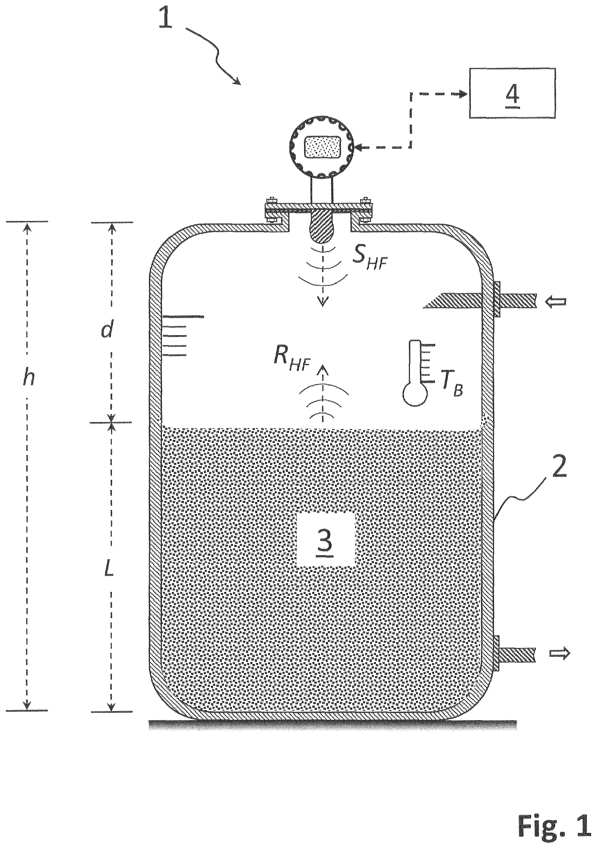

Zu einem grundlegenden Verständnis der Erfindung ist in Fig. 1 eine Anordnung eines erfindungsgemäßen Radar-basierten Füllstandsmessgerätes 1 an einem Behälter 2 gezeigt. Im Inneren des Behälters 2 befindet sich ein Füllgut 3, dessen Füllstand L zu bestimmen ist.

Zur Bestimmung des Füllstands L ist das Füllstandsmessgerät 1 in Bezug zum Behälterboden in einer vorbekannten Einbauhöhe h, die je nach Behältergröße bis zu mehr als 100 m hoch sein kann, oberhalb des Füllgutes 3 am Behälter 2 angebracht. Hierzu ist das Füllstandsmessgerät 1 so an der Oberseite des Behälters 2 angeordnet, dass es Hochfrequenz-Signale $S_{HF}$ in Richtung des Füllgutes 3 aussenden kann. Dies kann gemäß dem FMCW- oder auch dem Puls-Laufzeit-Verfahren, beispielsweise bei einer Frequenz von 79 GHz oder höher, erfolgen.

Nach Reflektion an der Füllgut-Oberfläche empfängt das Füllstandsmessgerät 1 die reflektierten Hochfrequenz-Signale $R_{HF}$, wobei die vom Füllstandsmessgerät 1 gemessene Laufzeit zwischen Aussenden und Empfangen der Hochfrequenz-Signale $S_{HF}$, $R_{HF}$ abhängig von der Entfernung d zur Füllgut-Oberfläche ist. Die anschließende Berechnung des Füllstandes L aus der Laufzeit bzw. der Entfernung d zur Füllgut-Oberfläche erfolgt durch das Füllstandsmessgerät 3 unter Kenntnis von dessen Einbauhöhe h:

$$L = h - d$$

Das erfindungsgemäße Füllstandsmessgerät 1 kann, wie in Fig. 1 dargestellt, mittels eines Bussystems, etwa "PROFIBUS", "HART" oder "Wireless HART" mit einer übergeordneten Einheit 4, beispielsweise einem Prozessleitsystem, oder einer dezentralen Datenbank verbunden sein. Hierüber können zum einen Informationen über den Füllstand L übermittelt werden, um gegebenenfalls am Behälter 2 vorhandene Zu- oder Abflüsse zu steuern. Es können aber auch etwaige Informationen über den Betriebszustand des Füllstandsmessgerätes 1 kommuniziert werden.

Je nach Einsatzzweck kann im Inneren des Behälters 2 eine Temperatur $T_B$ von bis zu mehr als 200 °C und/oder ein Überdruck von mehreren Bar vorherrschen, beispielsweise aufgrund einer chemischen Reaktion, die das Füllgut 3 momentan durchläuft. Außerdem kann ggf. korrosives Füllgut 3 durch Blasenbildung oder Überfüllung in direkten Kontakt mit dem Füllstandsmessgerät 1 geraten. Durch diese Einflüsse kann die Funktionsfähigkeit des Füllstandsmessgerätes 1 beeinträchtigt werden: Neben der begrenzten Temperaturstabilität der elektronischen Komponenten des Füllstandsmessgerätes 1 kann es insbesondere zu Kondensatbildung im Füllstandsmessgerät 1 kommen.

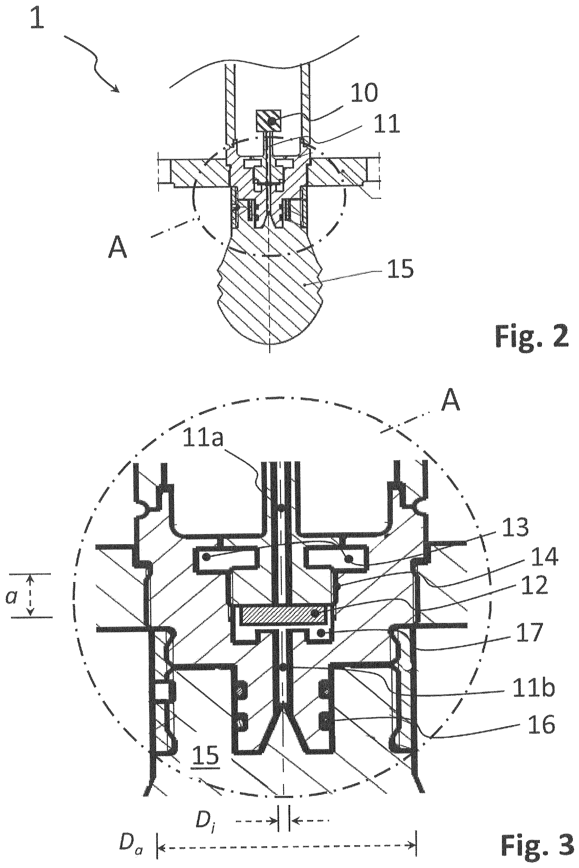

In Fig. 2 sind die in diesem Zusammenhang kritischen Komponenten des Füllstandsmessgerätes 1 in einer Querschnittsdarstellung gezeigt:

- Eine Hochfrequenz-Einheit 10 dient zur Erzeugung der auszusendenden Hochfrequenz-Signale $S_{HF}$ bzw. zur Verarbeitung der reflektierten Hochfrequenz-Signale $R_{HF}$. Je nach Funktionsprinzip umfasst die Hochfrequenz-Einheit 10 die die hierfür erforderlichen Funktionsblöcke: Bei Implementierung des FMCW-Verfahrens kann das Hochfrequenz-Signal $S_{HF}$ mittels einer PLL ("*Phase Locked Loop*") erzeugt werden, Das empfangene Hochfrequenz-Signal $R_{HF}$ kann per Mischer mit dem auszusendenden Hochfrequenz-Signal $S_{HF}$ gemischt werden, so dass aus der so genannten Differenz-Frequenz des gemischten Signals der Abstand d bzw. Füllstand L ermittelt werden kann. Ein entsprechend ausgelegter Auswertungsblock kann die Differenz-Frequenz beispielsweise mittels einer FFT ("*Fast Fourier Transformation*") des gemischten Signals ermitteln.

- Ein Hohlleiter 11, bei dem zumindest dessen Innenwand zur SignalLeitung elektrisch leitfähig ist, ist an die Hochfrequenz-Einheit 10 angeschlossen, um die Hochfrequenz-Signale $S_{HF}$ in den Behälter 2 auszukoppeln und die im Behälter 2 reflektierten Hochfrequenz-Signale $R_{HF}$ wieder in die Hochfrequenz-Einheit 10 einzukoppeln. Bei dem in Fig. 2 gezeigten Ausführungsbeispiel ist die gen Füllgut 3 gerichtete Öffnung des Hohlleiters 11 konisch aufweitend ausgelegt, wodurch eine entsprechende Antenne ausgebildet wird.

- Eine Prozesstrennung 15 aus einem für die Hochfrequenz-Signale $S_{HF}$, $R_{HF}$ transparenten Material (beispielsweise PMMA, PTFE oder PC) schließt die Antenne bzw. den Hohlleiter 11 gen Füllgut 3 hin ab, um so ein Eindringen des Füllgutes 3 in den Hohlleiter 11 zu verhindern.

Fig. 3 zeigt einen vergrößerten Ausschnitt A des Füllstandsmessgerätes 1 aus Fig. 2. Wie aus dieser Detailansicht A hervorgeht, ist der Hohlleiter 11 im Bereich der Antenne zur Prozesstrennung 15 hin zusätzlich durch zwei außenliegende Dichtringe 16 abgedichtet, da die Prozesstrennung 15 ggf. nicht die erforderliche Passgenauigkeit zur Antenne hin aufweisen kann. Die Druckbeständigkeit des Füllstandsmessgerätes 1 wird im Wesentlichen durch eine Isolation 12 im Inneren des Hohlleiters 11 erreicht. Die Isolation 12 ist im gezeigten Ausführungsbeispiel scheibenförmig ausgelegt, sie kann je nach zu erwartendem Überdruck eine Stärke zwischen 200 $\mu$m und 5 mm aufweisen. Idealerweise entspricht die Stärke der halben Wellenlänge der Hochfrequenz-Signal $S_{HF}$, $R_{HF}$. Auch die Isolation 12 ist für die Hochfrequenz-Signale $S_{HF}$, $R_{HF}$ transparent, also durchlässig, ausgelegt. Daher bietet sich als Material für die Isolation 12 zum Beispiel ein Glas an.

Durch die Isolation 12 wird der Hohlleiter 11 in einen ersten, der Hochfrequenz-Einheit 10 zugewandten Teilbereich 11a, und einen zweiten Teilbereich 11b, der im Betrieb dem Füllgut 3 zugewendet ist, aufgeteilt. Durch die Isolation 12 werden somit die zwei Teilbereiche 11a,b jeweils fluiddicht gegeneinander abgedichtet. Hierbei ist der Hohlleiter 11 im gezeigten Ausführungsbeispiel so konzipiert, dass der zweite Teilbereich 11b eine Einfassung für den ersten Teilbereich 11a bildet. Dazu umfasst der erste Teilbereich 11a ein Außengewinde, der zweite Teilbereich 11b umfasst ein korrespondierendes Innengewinde, so dass der erste Teilbereich 11a des Hohlleiters 11 über das resultierende Gewinde 14 in die Einfassung des zweiten Teilbereichs 11b einschraubbar ist. Die Isolation 12 kann dementsprechend vor Einschrauben, wie in Fig. 3 gezeigt, bspw. mittels Schweißen, am ersten Teilbereich 11a montiert werden.

Materialbedingt weisen die Dichtringe 16 lediglich einen endlich kleinen Gas-Permeationskoeffizienten in der Größenordnung von $10^{-12}$ kg/(s*bar) auf. Aufgrund dessen können trotz der Dichtringe 16 bzw. trotz der Prozesstrennung 15 mit steigender Betriebsdauer Gase, wie gasförmige Anteile des Füllgutes 3 in den zweiten Teilbereich 11b des Hohlleiters 11 diffundieren. Damit an der Isolation 12 dennoch keine Kondensation, zum Beispiel durch Wasserdampf bedingt, stattfindet, umfasst das Füllstandsmessgerät 1 erfindungsgemäß einen ersten Hohlraum 13. Dieser ist in Bezug zum zweiten Teilbereich 11b in einem Abstand a hinter der Isolation 12, also auf Höhe des ersten Teilbereichs 11a, angeordnet. Dabei ist der Hohlraum 13 in der gezeigten Ausführungsvariante rotationssymmetrisch um den Hohlleiter 11 angeordnet. Prinzipiell ist eine rotationssymmetrische Auslegung des ersten Hohlraums jedoch im Rahmen der Erfindung nicht fest vorgegeben. Wie in Fig. 3 zu erkennen ist, wird der Hohlraum 12 über das Gewinde 14 fluidisch mit dem zweiten Teilbereich 11b verbunden, so dass hierüber ein Gastransport bzw. ein Druckausgleich stattfinden kann.

Dies hat zur Folge, dass bei hohen Temperaturen $T_B$ im Behälter 2 die Kondensation nicht an der Isolation 12, sondern zuerst im ersten Hohlraum 13 stattfindet, da der erste Hohlraum 13 in Bezug zur Isolation 12 erfindungsgemäß weiter entfernt vom Füllgut 3 angeordnet ist.

Dementsprechend kann Kondensationsbildung an der Isolation 12 durch Verringerung des thermischen Widerstandes $R_{th,H}$ des Hohlleiters 11 zwischen der Isolation 12 und dem ersten Hohlraum 13

$$R_{th,G} = \frac{1}{\lambda_H} * \frac{a}{A_H}$$

vermieden werden. Dabei ist $\lambda_H$ ist der Wärmeleitkoeffizient des verwendeten Hohlleiter-Materials mit der Einheit W/(m*K). Edelstahl als potentielles Material für den Hohlleiter 11 weist beispielsweise einen Wärmeleitfähigkeitskoeffizienten $\lambda_H$ von 15 W/(m*K) auf.

$A_H$ bezeichnet die Querschnittsfläche des Hohlleiters 11 im Bereich zwischen der Isolation 12 und dem ersten Hohlraum 13. Die Querschnittsfläche $A_H$ bemisst sich bei rotationssymmetrischer Auslegung des Hohlleiters 11 zu

$$A_H = \frac{\pi}{4}(D_a^2 - D_i^2)$$

Dabei ist $D_a$ der Außendurchmesser und $D_i$ der Innendurchmesser des Hohlleiters 11. Bei quadratischer Auslegung des Hohlleiters 11 ergibt sich die Querschnittsfläche $A_H$ alternativ zu

$$A_H = D_a^2 - D_i^2$$

In diesem Fall handelt es sich bei $D_a$ bzw. $D_i$ um die äußere und innere Kantenlänge des quaderförmigen Hohlleiters 11.

Eine hinreichende Sicherheit vor Kondensatbildung an der Isolation 11 ist gegeben, wenn der thermische Widerstand $R_{th,H}$ konstruktiv so eingestellt wird, dass bei einer Temperatur $T_B$ im Behälter 2 von mindestens 180° C die Temperaturdifferenz zu der Temperatur im ersten Hohlraum 13 mindestens 30° C beträgt. Das Volumen des ersten Hohlraums 13 ist vorzugsweise in Abhängigkeit des Permeationskoeffizienten der Dichtringe 16 auszulegen, um Kondensatbildung an der Isolation 12 zu vermeiden. Eine hinreichende Bemessungsgrundlage besteht darin, dass das Volumen des Hohlraums 13 mit zumindest 1,2 cm³ pro einem Permeationskoeffizient der Dichtung von $10^{-12}$ kg/(s*bar) bemessen ist. Dabei ist zu berücksichtigen, dass der Permeationskoeffizient der Dichtringe 16 gegebenenfalls abhängig von der Temperatur $T_B$ im Behälter 2 ist.

Das in Fig. 3 gezeigte Füllstandsmessgerät 1 weist eine optionale Erweiterung der Erfindung in Form eines zweiten Hohlraums 17 auf. Im Gegensatz zum ersten Hohlraum 13 befindet sich der zweite Hohlraum 17 in Bezug zum zweiten Teilbereich 11b des Hohlleiters 11 vor der Isolation 12. Hierdurch wird das Risiko der Kondensatbildung an der Isolation 12 zusätzlich herabgesetzt, da durch den zusätzlichen, zweiten Hohlraum wird der Druckanstieg im gesamten Hohlraum verlangsamt und der für eine Kondensatbildung notwendige Druck später erreicht wird.

Diese Erweiterung kann beispielsweise Sinn machen, wenn der erste Hohlraum 13 aus konstruktiven oder Fertigungstechnischen Gründen nach den zuvor genannten Volumen-Vorgaben nicht hinreichend groß bemaßt werden kann, oder wenn der thermische Widerstand $R_{th,H}$ des Hohlleiters 11 beispielsweise wiederum aus konstruktiven Gründen nicht auf das zuvor beschriebene Höchstmaß reduziert werden kann.

## Bezugszeichenliste

| | | |
|---|---|---|
| 1 | | Füllstandsmessgerät |
| 2 | | Behälter |
| 3 | | Füllgut |
| 4 | | Übergeordnete Einheit |
| 10 | | Hochfrequenz-Einheit |
| 11 | | Hohlleiter |
| 11a | | Erster Hohlleiterbereich |
| 11b | | Zweiter Hohlleiterbereich |
| 12 | | Isolation |
| 13 | | Erster Hohlraum |
| 14 | | Gewinde |
| 15 | | Prozesstrennung |
| 16 | | Dichtring |
| 17 | | Zweiter Hohlraum |
| $A_H$ | | Querschnittsfläche des Hohlleiters |
| a | | Abstand zwischen dem zweiten Hohlleiterbereich und dem Hohlraum |
| $D_a$ | | Außen-Durchmesser bzw. Kantenlänge des Hohlleiters |
| $D_i$ | | Innen-Durchmesser bzw. Kantenlänge des Hohlleiters |
| d | | Distanz des Füllstandsmessgerätes zum Füllgut |
| h | | Einbauhöhe des Füllstandsmessgerätes |
| L | | Füllstand |
| $S_{HF}$, $R_{HF}$ | | Hochfrequenz-Signale |
| $R_{th,H}$ | | Thermischer Widerstand des Hohlleiters |
| $T_B$ | | Temperatur im Behälter-Inneren |
| $\lambda_H$ | | Wärmeleitkoeffizient |

## Patentansprüche

1. Füllstandsmessgerät zur Bestimmung eines Füllstandes (L) eines in einem Behälter (2) befindlichen Füllgutes (3), umfassend

   - Eine Hochfrequenz-Einheit (10), die ausgelegt ist, Hochfrequenz-Signale ($S_{HF}$, $R_{HF}$) derart zu erzeugen und/oder verarbeiten, um den Füllstand (L) zu bestimmen,
   - einen Hohlleiter (11), der so an die Hochfrequenz-Einheit (10) gekoppelt ist, um die Hochfrequenz-Signale ($S_{HF}$) gen Füllgut (3) zu senden und/oder um am Füllgut (3) reflektierte Hochfrequenz-Signale ($R_{HF}$) zu empfangen, wobei sich der Hohlleiter in

      ◦ einen ersten, der Hochfrequenz-Einheit (10) zugewandten Teilbereich (11a), und
      ◦ einen zweiten, dem Füllgut (3) zuwendbaren Teilbereich (11b) untergliedert,

   - eine für die Hochfrequenz-Signale ($S_{HF}$, $R_{HF}$) transparente Isolation (12), die den ersten Teilbereich (11a) fluidisch vom zweiten Teilbereich (11b) abtrennt,

   **gekennzeichnet durch**

   - einen ersten Hohlraum (13), der fluidisch mit dem zweiten Teilbereich (11b) verbunden ist, wobei der erste Hohlraum (13) in Bezug zum zweiten Teilbereich (11b) hinter der Isolation (12) angeordnet ist, wobei ein Gewinde (14) den ersten Hohlraum (13) fluidisch mit dem zweiten Teilbereich (11b) verbindet.

2. Füllstandsmessgerät nach Anspruch 1, **gekennzeichnet durch**

   - einen zweiten Hohlraum (17), der fluidisch mit dem zweiten Teilbereich (11b) verbunden ist, wobei der zweite Hohlraum (17) in Bezug zum zweiten Teilbereich (11b) vor der Isolation (12) angeordnet ist.

3. Füllstandsmessgerät nach Anspruch 1 oder 2, wobei die Hochfrequenz-Einheit (10) ausgelegt ist, die Hochfrequenz-Signale ($S_{HF}$, $R_{HF}$) mit Frequenzen von mehr als 75 GHz, insbesondere mehr als 100 GHz, zu erzeugen.

4. Füllstandsmessgerät nach einem der vorhergehenden Ansprüche, **dadurch gekennzeichnet, dass** der thermische Widerstand ($R_{th,H}$) des Hohlleiters (11) zwischen der Isolation (12) und dem ersten Hohlraum (13) derart bemessen ist, dass bei einer Temperatur ($T_B$) im Behälter (2) von mindestens 180° C die Temperaturdifferenz zu der Temperatur im ersten Hohlraum (13) mindestens 30° C beträgt.

5. Füllstandsmessgerät nach zumindest einem der vorhergehenden Ansprüche, umfassend:

   - Eine Prozesstrennung (15), die einen dem Füllgut (3) zuwendbaren Endbereich des zweiten Teilbereichs (11b) abschließt.

6. Füllstandsmessgerät nach Anspruch 5, wobei zwischen der Prozesstrennung (15) und dem Endbereich des zweiten Teilbereichs (11b) eine fluidische Dichtung, insbesondere aus zumindest zwei Dichtringen (16) bestehend, angeordnet ist.

7. Füllstandsmessgerät nach Anspruch 6, **dadurch gekennzeichnet, dass** der erste Hohlraum (13) derart in Abhängigkeit des Permeationskoeffizienten der fluidischen Dichtung ausgelegt ist, dass das Volumen des Hohlraums (13) mit zumindest 1,2 cm$^3$ pro einem Permeationskoeffizient der Dichtung von $10^{-12}$ kg/(s*bar) bemessen ist.

## Claims

1. Level transmitter for determining a level (L) of a medium (3) located in a vessel (2), said transmitter comprising

   - a high-frequency unit (10), which is designed to generate and/or process high-frequency signals ($S_{HF}$, $R_{HF}$) in such a way to determine the level (L),
   - a waveguide (11), which is coupled to the high-frequency unit (10) in such a way to send the high-frequency signals ($S_{HF}$) towards the medium (3) and/or to receive high-frequency signals ($R_{HF}$) reflected at the medium (3), wherein the waveguide is divided into

      o a first sub-section (11a) facing towards the high-frequency unit (10), and
      o a second sub-section (11b) that can face towards the medium (3),

   - a transparent isolator (12) for the high-frequency signals ($S_{HF}$, $R_{HF}$), which separates, in a fluidic manner, the first sub-section (11a) from the second sub-section (11b),

   **characterized in that**

   - a first cavity (13), which is connected, in a fluidic manner, to the second sub-section (11b), wherein, in relation to the second sub-section (11b), the first cavity (13) is arranged behind the isolator (12), wherein a thread (14) connects, in a fluidic manner, the first cavity (13) to the second sub-section (11b).

2. Level transmitter as claimed in Claim 1, **characterized in that**

   - a second cavity (17) connected, in a fluidic manner, to the second sub-section (11b), wherein, in relation to the second sub-section (11b), the second cavity (17) is arranged in front of the isolator (12).

3. Level transmitter as claimed in Claim 1 or 2, wherein the high-frequency unit (10) is designed to generate the high-frequency signals ($S_{HF}$, $R_{HF}$) with frequencies greater than 75 GHz, particularly greater than 100 GHz.

4. Level transmitter as claimed in one of the previous claims,
   **characterized in that**
   the thermal resistance ($R_{th,H}$) of the waveguide (11) between the isolator (12) and the first cavity (13) is sized in such a way that - with a temperature ($T_B$) in the vessel (2) of at least 180 °C, the temperature difference in relation to the temperature in the first cavity (13) is at least 30 °C.

5. Level transmitter as claimed in at least one of the previous claims, said transmitter comprising:

   - a process separation (15) that seals an end section of the second sub-section (11b) that can face towards the fill medium (3).

6. Level transmitter as claimed in Claim 5, wherein a fluidic seal, particularly consisting of at least two sealing rings (16), is arranged between the process separation (15) and the end section of the second sub-section (11b).

7. Level transmitter as claimed in Claim 6, **characterized in that**
   the first cavity (13) is designed as a function of the permeation coefficient of the fluidic seal in such a way that the volume of the cavity (13) is sized at least to 1.2 cm$^3$ per one permeation coefficient of the seal of $10^{-12}$ kg/(s*bar).

## Revendications

1. Transmetteur de niveau destiné à la détermination d'un niveau (L) d'un produit (3) se trouvant dans un réservoir (2), lequel transmetteur comprend

   - une unité haute fréquence (10), laquelle est conçue pour générer et/ou traiter des signaux haute fréquence ($S_{HF}$, $R_{HF}$) de manière à déterminer le niveau de remplissage (L),
   - un guide d'ondes (11), lequel est couplé à l'unité haute fréquence (10) de manière à émettre les signaux haute fréquence ($S_{HF}$) vers le produit (3) et/ou à recevoir des signaux haute fréquence ($R_{HF}$) réfléchis sur le produit (3), le guide d'ondes se divisant en

     o une première zone partielle (11a) tournée vers l'unité haute fréquence (10), et
     o une deuxième zone partielle (11b) pouvant être tournée vers le produit (3),

   - une isolation (12) transparente pour les signaux haute fréquence ($S_{HF}$, $R_{HF}$), qui sépare au plan fluidique la première zone partielle (11a) de la deuxième zone partielle (11b),

   **caractérisé par**

     - une première cavité (13), laquelle est reliée au plan fluidique à la deuxième zone partielle (11b), la première cavité (13) étant disposée derrière l'isolation (12) par rapport à la deuxième zone partielle (11b), un filetage (14) reliant au plan fluidique la première cavité (13) à la deuxième zone partielle (11b).

2. Transmetteur de niveau selon la revendication 1, **caractérisé par**

     - une deuxième cavité (17) reliée au plan fluidique à la deuxième zone partielle (11b), la deuxième cavité (17) étant disposée en amont de l'isolation (12) par rapport à la deuxième zone partielle (11b).

3. Transmetteur de niveau selon la revendication 1 ou 2, pour lequel l'unité haute fréquence (10) est conçue pour générer les signaux haute fréquence ($S_{HF}$, $R_{HF}$) avec des fréquences supérieures à 75 GHz, notamment supérieures à 100 GHz.

4. Transmetteur de niveau selon l'une des revendications précédentes,
   **caractérisé en ce que**
   la résistance thermique ($R_{th,H}$) du guide d'ondes (11) entre l'isolation (12) et la première cavité (13) est dimensionnée de telle sorte que, pour une température ($T_B$) dans le réservoir (2) d'au moins 180 °C, la différence de température avec la température dans la première cavité (13) est d'au moins 30 °C.

5. Transmetteur de niveau selon au moins l'une des revendications précédentes, lequel transmetteur comprend :

- une séparation de process (15), laquelle ferme une zone d'extrémité de la deuxième zone partielle (11b) pouvant être tournée vers le produit de remplissage (3).

6. Transmetteur de niveau selon la revendication 5, pour lequel un joint d'étanchéité fluidique, constitué notamment d'au moins deux bagues d'étanchéité (16), est disposé entre la séparation de process (15) et la zone d'extrémité de la deuxième zone partielle (11b).

7. Transmetteur de niveau selon la revendication 6, **caractérisé en ce que** la première cavité (13) est conçue en fonction du coefficient de perméation du joint fluidique de telle sorte que le volume de la cavité (13) est dimensionné à au moins 1,2 cm$^3$ pour un coefficient de perméation du joint de 10$^{-12}$ kg/(s*bar).

Fig. 1

1

Fig. 2

Fig. 3

**IN DER BESCHREIBUNG AUFGEFÜHRTE DOKUMENTE**

**In der Beschreibung aufgeführte Patentdokumente**

- DE 102010063430 A1
- WO 2012139852 A1
- US 5703289 A